Europäisches Patentamt

European Patent Office

Office européen des brevets

(11) Veröffentlichungsnummer: **0 334 018 B1**

(12) **EUROPÄISCHE PATENTSCHRIFT**

(45) Veröffentlichungstag der Patentschrift: **07.10.92**

(21) Anmeldenummer: **89102728.6**

(22) Anmeldetag: **17.02.89**

(51) Int. Cl.⁵: **D05B 69/22**, G01D 5/34

(54) **Positionsgeber.**

(30) Priorität: **22.03.88 DE 3809569**

(43) Veröffentlichungstag der Anmeldung:
**27.09.89 Patentblatt 89/39**

(45) Bekanntmachung des Hinweises auf die
Patenterteilung:
**07.10.92 Patentblatt 92/41**

(84) Benannte Vertragsstaaten:
**DE ES FR GB IT**

(56) Entgegenhaltungen:
EP-A- 0 011 099    WO-A-86/06895
DE-A- 2 811 807    DE-A- 3 121 118
DE-U- 8 717 292    FR-A- 1 547 592
FR-A- 2 271 709    FR-A- 2 310 549
GB-A- 2 023 306    GB-A- 2 067 282
US-A- 3 723 748

OPTIK vol. 79, no. 2, 1988, STUTTGART Seite
67 - 74; Yajun-Li: "OPTICAL VALVE USING
BAR CODES"

(73) Patentinhaber: **Frankl & Kirchner GmbH. & Co.
KG Fabrik für Elektromotoren und elektrische Apparate
Scheffelstrasse 73
W-6830 Schwetzingen(DE)**

(72) Erfinder: **Schmidt, Thomas
Am Rosenwingert 14
W-6909 Rauenberg(DE)**
Erfinder: **Olbrich, Bernd
Segnerstrasse 2
W-6834 Ketsch(DE)**
Erfinder: **Nohl, Gerd
Eckertswiesen 15
W-6909 Rauenberg(DE)**
Erfinder: **Rohr, Gustav
Heidelberger Strasse 32
W-6907 Nussloch(DE)**

(74) Vertreter: **Schneck, Herbert, Dipl.-Phys., Dr. et
al
Rau & Schneck Patentanwälte Königstrasse
2
W-8500 Nürnberg 1(DE)**

## Beschreibung

Die Erfindung richtet sich auf einen Positionsgeber, insbesondere für Industrienähmaschinen, umfassend eine mit einer Antriebswelle der Maschine koppelbare, drehbar gelagerte Schlitzscheibe mit einer Mehrzahl gleich breiter und äquidistant angeordneter, eine erste radiale Spur bildender Schlitze und Stege sowie in axialer Richtung hinter der Schlitzscheibe angeordnete, um einen definierten Winkel in Umfangsrichtung gegeneinander versetzt, konzentrisch zur Schlitzscheibe angeordnete, ortsfeste Schlitzblenden umfassend Schlitze und Stege entsprechend der Teilung der Schlitzscheibe sowie je einen hinter jeder Schlitzblende angeordneten ersten und zweiten Licht-Sender bzw. Licht-Empfänger und je einen hierzu jeweils achsparallel jenseits der Schlitzscheibe angeordneten ersten und zweiten Licht-Empfänger bzw. Licht-Sender, wobei den Licht-Empfängern eine elektronische Auswerteanordnung zur Ermittlung der Drehgeschwindigkeit und des Drehwinkels relativ zu einem Nullpunkt aus der Anzahl der gezählten, durch die Schlitze verursachten Lichtimpulse und zur Ermittlung der Drehrichtung aus der Phasenverschiebung der Signale aufgrund des Winkelversatzes der Schlitzblenden nachgeordnet ist.

Ein derartiger Positionsgeber ist z.B. aus der US-PS 3 723 748 bekannt.

Für zahlreiche Anwendungen von Positionsgebern, z.B. an Werkzeugmaschinen, ist es erforderlich, daß die absolute Winkellage bestimmter Winkelpositionen der Antriebswelle erfaßt wird, da diese Positionen entsprechenden Positionen des Bearbeitungswerkzeuges entsprechen. Bei Nähmaschinen gibt es beispielsweise zwei gängige Stop-Positionen, welche als Position 1 und Position 2 bezeichnet werden und der Nadelhochstellung bzw. der Nadeltiefstellung entsprechen. Diese Positionen werden im Bezug auf einen Nullpunkt des Positionsgebers definiert. Nach dem Einschalten der Maschine muß grundsätzlich eine Nullpunktsynchronisation erfolgen. Herkömmliche Positionsgeber müssen zu diesem Zweck mindestens einen Winkelbereich von 18o° bzw. 36o° zurücklegen, um den Nullpunkt sicher erkennen zu können. Zur Festlegung der vorstehend angesprochenen definierten Winkelpositionen, z.B. der Position 1 und der Position 2 sind zusätzlich zu der Schlitzscheibe für die Drehzahlmessung herkömmlicherweise weitere Scheiben koaxial zur Schlitzscheibe und im Abstand von dieser erforderlich, z.B. eine zweite Scheibe zur Festlegung der Stop-Position 1 und eine dritte Scheibe zur Festlegung der Stop-Position 2.

Hiervon ausgehend liegt der Erfindung die Aufgabe zugrunde, einen Positionsgeber so auszugestalten, daß eine Nullpunktsynchronisation unter Zurücklegung eines möglichst geringen Drehwinkels möglich ist, wobei die Einstellung und Erfassung definierter Winkelpositionen ohne gesonderte zusätzliche Scheiben möglichst einfach realisierbar sein soll.

Diese Aufgabe wird erfindungsgemäß dadurch gelöst, daß die Schlitzscheibe eine zweite Mehrzahl von eine zweite radiale Spur ausbildenden Schlitzen aufweist, welche radial gegen die erste Spur versetzt sind, wobei die Schlitze der zweiten Spur in Umfangsrichtung jeweils unterschiedliche Schlitzbreiten aufweisen, und wobei für die zweite Spur ein dritter Licht-Sender und ein dritter Licht-Empfänger vorgesehen sind, wobei dem dritten Licht-Empfänger eine zweite, mit der ersten verbundene elektronische Auswerteanordnung zur Zählung der Lichtimpulse oder Impulsflanken des ersten oder zweiten Empfängers während der jeweils einer bestimmten Schlitzbreite entsprechenden Impulsdauer (Fensterbreite) des dritten Empfängers zur Identifizierung des entsprechenden Schlitzes der zweiten Spur und damit der Winkelposition der Schlitzscheibe nachgeordnet ist.

Bei der Anwendung eines erfindungsgemäßen Positionsgebers an einer Nähmaschine ist es im praktischen Betrieb von besonderer Bedeutung, daß eine Betriebssituation vorkommt, bei welcher der Antrieb ausgeschaltet und das Handrad verdreht wird. Diese Verdrehung des Handrades im stromlosen Zustand der Steuerung führt dann dazu, daß die Synchronisation und die Zählung nach Wiedereinschalten der Steuerung nicht mehr korrekt erfolgen kann, ohne daß eine neue Nullpunktsynchronisation durchgeführt wird. Erfindungsgemäß ist es möglich, eine solche Nullpunktsynchronisation besonders schnell zu realisieren.

Eine erfindungsgemäß ausgebildete Schlitzscheibe macht eine Nullpunkterkennung bzw. Nullpunktsynchronisation z.B. innerhalb eines Winkelbereiches von maximal 45° zuzüglich der jeweiligen Fensterbreite erforderlich, da durch die unterschiedliche Größe der Schlitze der zweiten Spur und durch die elektronische Erkennung und Erfassung dieser Größe durch die Zählung der korrespondierenden, in den so definierten Fensterbereich fallenden Impulse möglich ist. Dies bedeutet, daß zur Bestimmung der absoluten Winkelposition der Schlitzscheibe lediglich ein Schlitz der zweiten Spur einschließlich der Position seiner Begrenzungskanten identifiziert werden muß, um ausgehend hiervon unter Heranziehung der in der Auswerteanordnung abgespeicherten Relativlage des Nullpunkts oder einer anderen Winkelposition die Lage des Nullpunkts oder der entsprechenden Position erkennen zu können. Gleichzeitig ermöglicht es die elektronische Abspeicherung des Nullpunkts bzw. bestimmter Positionen, diesen Nullpunkt und die Lage dieser Positionen auf elektronischem Wege, vorzugsweise durch digitale Programmierung zu ändern. Damit ermöglicht es ein erfindungsgemäßer Positionsgeber, nicht nur unter Zurücklegung eines relativ kleinen Winkelbereichs einen Nullpunktsynchronisationsvorgang durchzuführen, sondern mit Hilfe nur einer einzigen Schlitzscheibe können auch weitere Positionen definiert und verändert werden, so daß der herkömmlicherweise erforderliche mechanische Einstellvorgang durch Verdrehen von drei Scheiben relativ zueinander und anschließendes mechanisches Festlegen entfällt. Dadurch ist ein erfindungsgemäßer Positionsgeber nicht nur einfacher im Aufbau, sondern auch bequemer im Service und aufgrund seiner freien Programmierbarkeit auch universeller einsetzbar, da über die Programmierung praktisch eine beliebige Zahl definierter, abrufbarer Winkelpositionen festlegbar ist.

Gemäß einer ersten Ausführungsform ist vorgesehen, daß die Schlitze der ersten und zweiten Spur so relativ zueinander angeordnet und dimensioniert sind, daß in jedem der durch die Schlitzbreite der Schlitze der zweiten Spur definierten Fensterbereiche eine unterschiedliche Anzahl von vollständigen Schlitzen der ersten Spur liegt und die zweite Auswerteanordnung die Anzahl der diesen Schlitzen entsprechenden Impulse erfaßt. Es werden also bei dieser Ausführungsform ganze Impulse gezählt. Dabei ist zu berücksichtigen, daß die Impulsbreite der gezählten Impulse kleiner ist als die sich aus der Schlitzbreite der Schlitze der ersten Spur an sich ergebende Impulsbreite, was auf die jeweils nachgeordnete feststehende Schlitzblende zurückzuführen ist.

Bei einer anderen Ausführungsform ist vorgesehen, daß die Schlitze der ersten und zweiten Spur so relativ zueinander angeordnet und dimensioniert sind, daß in jeden der durch die Schlitzbreite der Schlitze der zweiten Spur definierten Fensterbereiche eine unterschiedliche Anzahl von Vorderkanten oder Hinterkanten von Schlitzen der ersten Spur fällt und die zweite Auswerteeinrichtung die Anzahl der dieser Vorderkanten bzw. Hinterkanten entsprechenden positiven, d.h. ansteigenden, oder negativen, d.h. abfallenden, Impulsflanken zählt.

Durch eine derartige Auswertung der Impulsflanken wird eine besonders scharfe Signalerkennung und eindeutige Lagezuordnung ermöglicht.

Zur Erzielung einer drehrichtungsunabhängigen Auswertung ist vorgesehen, daß durch die zweite Auswerteanordnung bei einer Drehbewegung in eine erste Drehrichtung (vorwärts) die positiven, d.h. ansteigenden Impulsflanken und bei einer Drehbewegung in eine zweite Drehrichtung (rückwärts) die negativen, d.h. abfallenden Impulsflanken gezählt werden.

In diesem Zusammenhang ist vorzugsweise vorgesehen, daß die Schlitze der ersten und zweiten Spur so relativ zueinander angeordnet und dimensioniert sind, daß die Zahl der ausgewerteten, Impulsflanken ausbildenden Schlitzkanten der ersten Spur innerhalb jedes durch die Schlitze der zweiten Spur definierten Fensterbereichs größer ist als die Zahl der nichtausgewerteten, Impulsflanken ausbildenden Kanten.

Dies bedeutet, daß wenn z.B. die in Drehrichtung gesehen vorne liegenden Kanten der Schlitze der ersten Spur ausgewertet werden, diese Schlitze relativ zu den Schlitzen der zweiten Spur so angeordnet sind, daß im Fensterbereich auf jeden Fall mehr Vorderkanten liegen als Hinterkanten, d.h. eine Hinterkante kann durch den Fensterbereich jeweils abgeschnitten sein. Das gleiche gilt bei einer Drehbewegung in die umgekehrte Richtung, wobei dann die gleichen Kanten der Schlitze ausgewertet werden, diese dann aber abfallende Flanken darstellen.

Vorzugsweise ist vorgesehen, daß die zweite Spur und die zugeordneten dritten Sender und Empfänger radial innerhalb der ersten Spur angeordnet sind. Für die schmäleren Schlitze der ersten Spur steht dann der größere, radial weiter außen liegende Umfangsbereich zur Verfügung.

Bei einer bevorzugten Ausführungsform weist die erste Spur $2^N$ Schlitze, insbesondere 512 Schlitze, und die zweite Spur $2^K$, insbesondere acht Schlitze, auf, wobei K,N ganze Zahlen sind und gilt $K < N$. Diese Anzahl ergibt sich daraus, daß die Zahl der Schlitze auf der ersten Spur zur Erzielung einer einfachen digitalen Auswertung eine ganzzahlige Potenz von zwei sein sollte. Bei den aus Gründen der Baugröße in Betracht kommenden Scheibendurchmessern ergibt sich aufgrund dieser Forderung eine vorzugsweise Schlitzzahl von 512. Werden auf der inneren Spur acht Schlitze vorgesehen, ist es bei dieser Zahl 512 von Schlitzen auf der äußeren Spur möglich, den Schlitzen auf der inneren Spur eine unterschiedliche Breite zuzuordnen und trotzdem eine hinreichende Separation zwischen dem breitesten und zweitbreitesten Schlitz der inneren, zweiten Spur zu erreichen.

Dabei sind günstigerweise die einen Schlitzkanten der Schlitze der zweiten Spur jeweils in einem Winkelabstand von 45° zueinander angeordnet. Eine derartige äquidistante Anordnung erleichtert die Auswertung, weil zumindest eine Schlitzkante jeweils in ihrer Relativlage zu den anderen definiert vorgegeben ist.

Um sicherzustellen, daß bei einer Impulsflankenauswertung die auszuwertende Flanke nicht zu nahe an den Rand eines Fensterbereichs gelangt, ist vorgesehen, daß die Schlitze der ersten und zweiten Spur und die Schlitze derjenigen Blende, deren zugeordneter Empfänger zur Zählung der Impulsflanken herangezogen wird, so relativ zueinander angeordnet sind, daß die zu zählenden Impulsflanken etwa in der Mitte des kleinsten Schlitzes der zweiten Spur bzw. des daraus resultierenden Fensterbereichs zu liegen kommen.

Eine besonders einfache und auswertungstechnisch vorteilhafte Nullpunktfestlegung wird dadurch erreicht, daß als Nullpunkt eine Schlitzkante eines Schlitzes der zweiten Spur herangezogen wird.

Weitere Merkmale, Vorteile und Einzelheiten der Erfindung ergeben sich aus der folgenden Beschreibung einer bevorzugten Ausführungsform anhand der Zeichnung. Dabei zeigen

Fig. 1          eine schematische perspektivische Darstellung der funktionswesentlichen Teile eines erfindungsgemäßen Positionsgebers,

Fig. 2          eine Aufsicht auf eine erfindungsgemäße Schlitzscheibe,

Fig. 3 und 4    zwei Varianten der Relativlage der Schlitze der ersten und zweiten Spur zueinander,

Fig. 5          eine Veranschaulichung der Relativlage der Schlitze auf der ersten und zweiten Spur relativ zueinander und relativ zu den Schlitzen der feststehenden Blende bei der Ausführungsform nach Fig. 4 und

Fig. 6          eine blockschaltbildartige Darstellung der Auswertungsanordnungen.

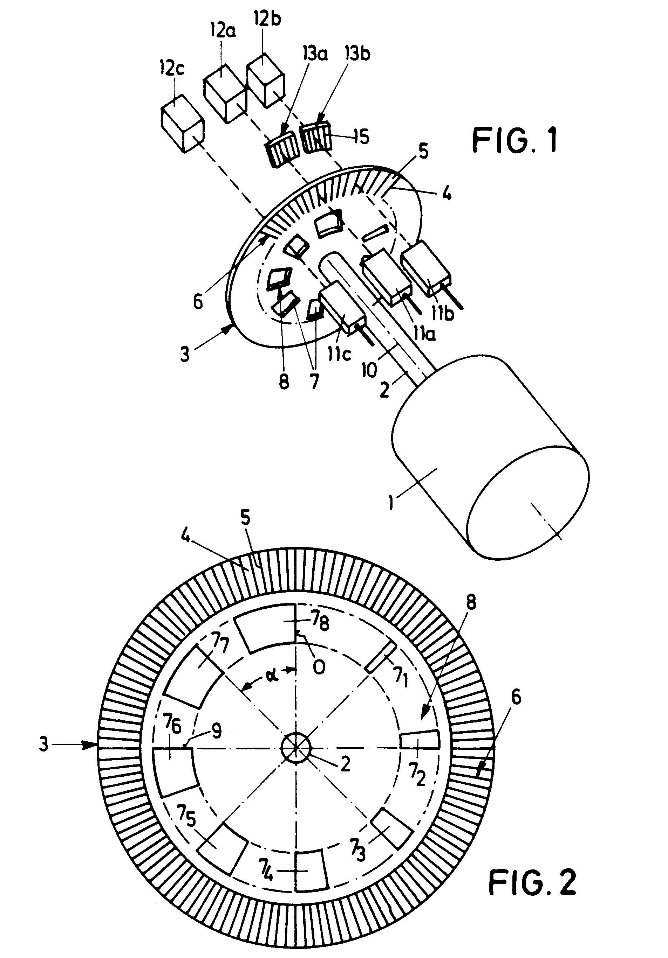

In der Fig. 1 ist schematisch ein elektrischer Antriebsmotor 1 mit einer Antriebswelle 2 dargestellt, über welche eine in der Zeichnung nicht dargestellte Arbeitsmaschine, z.B. eine Nähmaschine angetrieben wird.

Auf der Welle 2 sitzt eine Schlitzscheibe 3, welche im Bereich ihrer Peripherie eine Mehrzahl von Schlitzen 4 aufweist, welche jeweils durch Stegabschnitte 5 voneinander getrennt sind. Da die Schlitzzahl eine ganzzahlige Potenz von 2 sein soll, sind im Ausführungsbeispiel vorzugsweise 512 Schlitze auf der durch diese Mehrzahl von Schlitzen 4 gebildeten äußeren Spur 6 vorgesehen.

Radial weiter innen auf der Schlitzscheibe 3 ist durch eine zweite Mehrzahl von Schlitzen 7 eine zweite, innere Spur 8 ausgebildet. Es sind dort insgesamt acht Schlitze 7 vorgesehen, welche jeweils eine unterschiedliche Größe (Schlitze $7_1$ - $7_8$). Die Breite des schmalsten Schlitzes $7_1$ entspricht etwa der Breite der Schlitze 4.

Die in einer der Drehrichtungen der Schlitzscheibe 3 vorne liegenden Kanten 9 der Schlitze 7 sind zueinander jeweils um einen gleichen Winkelbereich $\alpha$ von im Ausführungsbeispiel 45° versetzt. Die entsprechende Kante 9 des größten Schlitzes $7_8$ wird als Nullpunkt 0 festgelegt. Die vorstehend beschriebene Ausgestaltung der Schlitze 4 bzw. 7 und der Schlitzscheibe 3 ergibt sich insbesondere aus Fig. 2.

In Fig. 1 ist perspektivisch dargestellt, daß achsparallel zu der Längsachse 10 der Welle 2 vor der Schlitzscheibe 3 drei Licht-Sender 11 angeordnet sind, wovon die Licht-Sender 11a und 11b in einem radialen Abstand von der Achse 10 befestigt sind, welcher dem radialen Abstand der äußeren Spur 6 von Schlitzen 4 entspricht, während der Licht-Sender 11c in einem radialen Abstand angeordnet ist, welcher dem radialen Abstand der zweiten Spur 8 von Schlitzen 7 entspricht.

Nach Art von Gabellichtschranken ist jenseits der Schlitzscheibe 3 jedem Sender 11 ein Licht-Empfänger 12 zugeordnet, wobei die Licht-Empfänger 12a und 12b dementsprechend radial weiter außen und der Licht-Empfänger 12c radial weiter innen liegt.

Zwischen den Sendern 11a bzw. 11b bzw. der Schlitzscheibe 3 einerseits und den Empfängern 12a bzw. 12b sind zwei feststehende Schlitzblenden 13a bzw. 13b angeordnet.

Mit Hilfe der Schlitze 4 und Stege 5 der Spur 6 der Schlitzscheibe, der Sender 11a,11b, welche um einen Winkelbereich umfangsmäßig gegeneinander versetzt sind und der entsprechend versetzten Schlitzblenden 13a,13b sowie der Empfänger 12a,12b läßt sich über die zugehörige erste elektronische Auswerteanordnung 14 die Drehgeschwindigkeit der Welle 2 und aus der Phasenverschiebung der Signale in den Lichtstrahlengängen a und b die Drehrichtung ermitteln, wie in der US-PS 3 723 748, auf welche zur Vermeidung von Wiederholungen Bezug genommen wird, im einzelnen beschrieben wird. Das Verhältnis der Breite von Schlitzen 4 und Stegen 5 ist in Fig. 2 nicht maßstabsgerecht dargestellt.

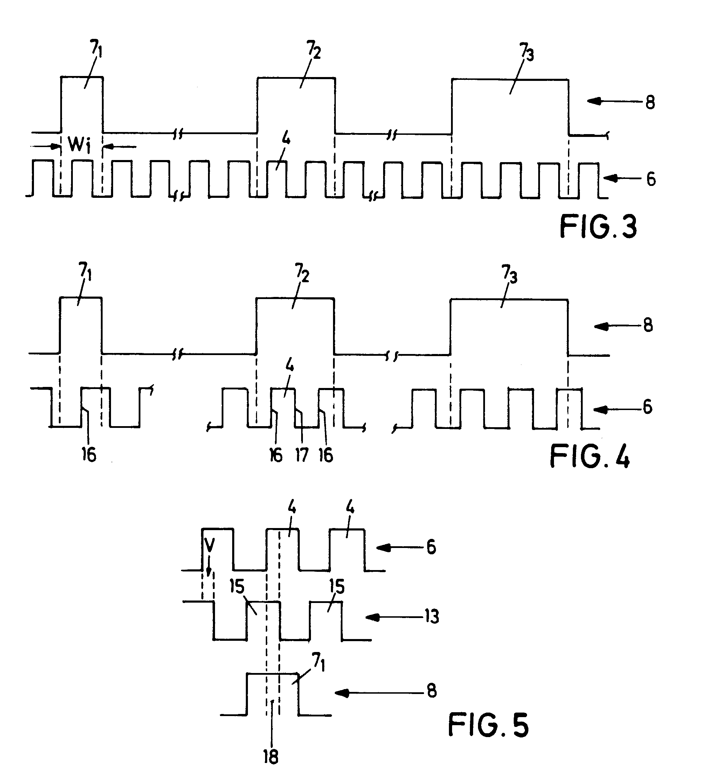

Bezugnehmend auf die Fig. 3 bis 5 wird nachfolgend lediglich die bevorzugte Dimensionierung und Anordnung der Schlitze 4 bzw. 7 bzw. der Schlitze 15 der Schlitzblenden 13 relativ zueinander erläutert. Zur Erzielung einer einfacheren und übersichtlichen Darstellung sind dabei die an sich kreisbogenförmig angeordneten Schlitze linear untereinander dargestellt.

In Fig. 3 ist eine Ausführungsform dargestellt, bei welcher elektronisch jeweils ganze Impulse entsprechend den Schlitzen 4 auf der Spur 6 gezählt werden. Aufgrund der Blenden 13 entspricht lediglich die Impulsbreite nicht voll der Breite der Schlitze 4. Bei dieser Ausführungsform ist die Spur 6 bzw. deren Schlitze 4 relativ zu der Spur 8 und deren Schlitzen 7 so angeordnet, daß in jeden durch einen Schlitz 7 aufgespannten Fensterbereich W jeweils eine ganze Zahl von Schlitzen 4 liegt, d.h. bei dem in Fig. 3 dargestellten Beispiel in dem Fensterbereich $W_1$, welcher durch den Schlitz

$7_1$ der Spur 8 definiert wird ein Schlitz 4 der Spur 6, beim Schlitz $7_2$ der Spur 8 zwei Schlitze 4, beim Schlitz $7_3$ der Spur 8 drei Schlitze 4 usw. Geht man allgemein davon aus, daß die Impulsfolge bzw. der Abstand entsprechender Flanken oder Schlitzkanten P beträgt, ergibt sich für das Verhältnis von Fensterbreite und Anzahl von Impulsen M in jedem Fenster: $(M-1) \cdot P < W < M \cdot P$.

Bei der in Fig. 4 dargestellten Ausführungsform werden nicht ganze Impulse ausgewertet, sondern lediglich Impulsflanken 16. Bei einer ersten Drehrichtung stellen diese Flanken 16 ansteigende Flanken und bei einer zweiten Drehrichtung abfallende Flanken dar. Dementsprechend werden in Abhängigkeit von der Drehrichtung abfallende oder ansteigende Flanken ausgewertet. Die geometrische Anordnung ist so getroffen, daß jeweils eine definierte Anzahl der ausgewerteten Flanken 16 von Impulsen aufgrund der Schlitze 4 in der Spur 6 in einen Fensterbereich W fällt, der durch die Schlitze 7 in der Spur 8 aufgespannt wird. Dementsprechend fallen in den Fensterbereich des Schlitzes $7_1$ eine Flanke 16, in den Fensterbereich des Schlitzes $7_2$ zwei Flanken 16 usw. Dabei ist die Anzahl der ausgewerteten Flanken 16 in jedem Fensterbereich jeweils um 1 größer als die Anzahl der nichtausgewerteten Flanken 17. Bei dieser Art der Auswertung ergibt sich für die Zahl M' der Flanken bzw. die Fensterbreite W folgendes:

$$(M-1)P < W < \frac{2M-1}{2} \cdot P$$

In Fig. 5 ist dargestellt, wie aus den Schlitzen 4 der Spur 6 im Zusammenwirken mit den Schlitzen 15 der feststehenden Schlitzblenden 13 ein resultierender Impuls 18 gebildet wird, wobei die Relativlage der Schlitze 4 und 7 der Spuren 6 und 8 sowie der Schlitze 15 der Schlitzblende 13 so gewählt ist, daß der auszuwertende Impuls 18 bzw. die zugehörige Impulsflanke möglichst im Bereich der Mitte des kleinsten Fensterbereiches $W_1$ entsprechend dem Spalt $7_1$ der Spur 8 zu liegen kommt.

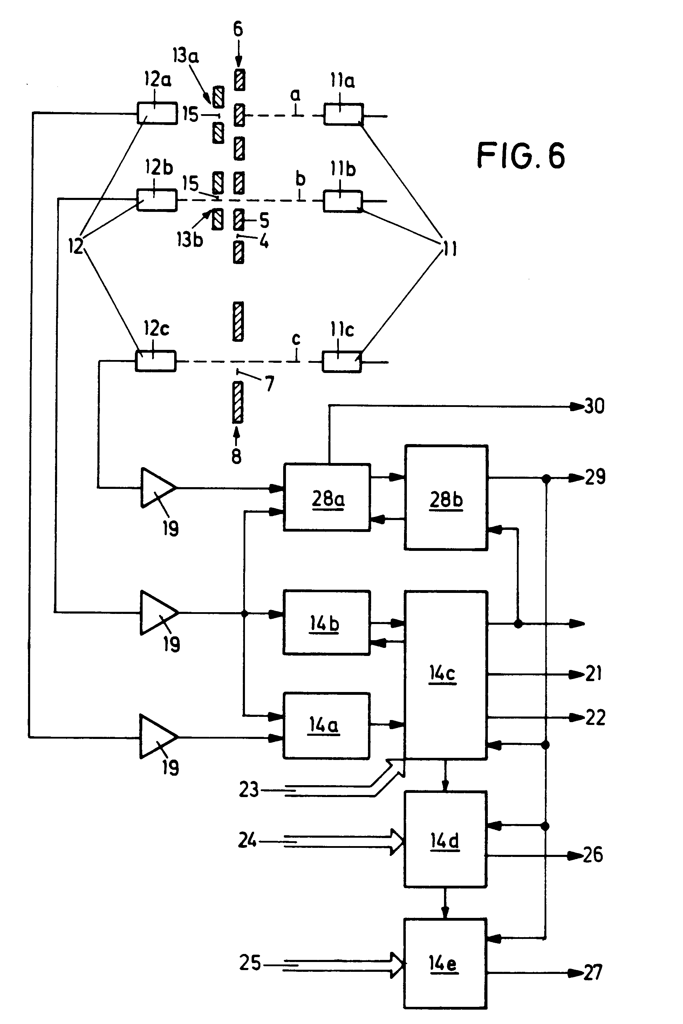

In Fig. 6 ist schematisch die Auswertung von Drehgeschwindigkeit, Drehrichtung sowie die Nullpunktsynchronisation und die Abfassung definierter Drehwinkelpositionen dargestellt. Dabei sind im oberen Teil der Zeichnung die radial in unterschiedlichem Abstand auf der Schlitzscheibe angeordneten Spuren 8 und 6 untereinander eingezeichnet.

Die Sender 11 und Empfänger 12 sind blockartig dargestellt.

Den Empfängern 12 ist jeweils ein Verstärker 19 nachgeschaltet. In der Auswerteanordnung 14 wird über einen Zähler 14b und einen Phasenvergleicher 14a sowie einer Auswertelogik 14c umfassend einen Mikroprozessor ein Ausgangssignal am Ausgang 20 für die Drehrichtung, am Ausgang 21 für Drehfrequenz und am Ausgang 22 für die Winkelposition 1 erzeugt. Die Winkelposition 1 kann, wie durch den Pfeil 23 symbolisch dargestellt, in die Speichereinrichtung der Auswertelogik 14c einprogrammiert werden. Darüber hinaus ist es möglich, wie durch die Kästen 14d und 14e und die Pfeile 24 und 25 veranschaulicht, weitere für den Betrieb der jeweiligen Maschine, z.B. der Nähmaschine, relevante Winkelpositionen zu programmieren und über die Ausgänge 26 und 27 auszugeben.

Die Auswerteanordnung 14 wirkt zur Ermittlung und Ausgabe der genannten Drehwinkelpositionen zusammen mit einer Auswerteanordnung 28, welche dem Empfänger 12c der zweiten Spur 8 nachgeordnet ist, und welche einen Zähler 28a und eine Auswertelogik mit einem Mikroprozessor 28b umfaßt. Über die Auswerteanordnung 28 wird am Ausgang 29 ein Nullpunkt-Referenzsignal ausgegeben und über den Ausgang 30 ein Positionssignal entsprechend dem jeweiligen Schlitz $7_i$.

Die absolute Winkelposition der Schlitzscheibe 3 und damit der Antriebswelle 2 kann, wie aus dem Vorstehenden deutlich wird, erfindungsgemäß also dadurch ermittelt werden, daß durch Zählen der Schlitze auf der Spru 6 während des Passierens eines Schlitzes 7 auf der Spur 8 die Breite dieses jeweiligen Schlitzes $7_i$ bestimmt wird. Da sämtliche Schlitze $7_i$ eine unterschiedliche Breite aufweisen, ist auf diese Weise die Identifizierung des jeweiligen Schlitzes $7_i$ und aus der in der Auswerteanordnung abgespeicherten bekannten Winkellage die Bestimmung des Nullpunktes und weiterer Positionen möglich. Zur Identifizierung eines bestimmten Schlitzes $7_i$ und damit zur Nullpunktsynchronisation ist in der Regel ein Drehwinkelbereich zu durchfahren, der erheblich geringer ist als 180°. Im ungünstigsten Fall einer Startposition ist beim Einschalten ein Winkelbereich von ca. 45° zurückzulegen, um eine eindeutige Identifizierung der Winkellage zu ermöglichen.

**Patentansprüche**

1. Positionsgeber, insbesondere für Industrienähmaschinen, umfassend eine mit einer Antriebswelle (2) der Maschine koppelbare, drehbar gelagerte Schlitzscheibe (3) mit einer Mehrzahl gleichbreiter und äquidistant angeordneter, eine erste radiale Spur (6) bildender Schlitze (4) und Stege (5) sowie in axialer Richtung hinter der Schlitzscheibe (3) angeordnete, um einen definierten Winkel in Umfangsrichtung gegeneinander versetzt, konzentrisch zur Schlitzscheibe (3) angeordnete, ortsfeste Schlitzblenden (13a, 13b) umfassend Schlitze (15) und Stege entsprechend der Teilung der Schlitzscheibe sowie je einen hinter jeder Schlitzblende angeordneten ersten und zweiten Licht-Sender (11a, 11b) bzw. Licht-Empfänger (12a, 12b) und je einen hierzu jeweils achsparallel jenseits der Schlitzscheibe angeordneten ersten und zweiten Licht-Empfänger (12a, 12b) bzw. Licht-Sender (11a, 11b), wobei den Licht-Empfängern (12a, 12b) eine elektronische Auswerteanordnung zur Ermittlung der Drehgeschwindigkeit und des Drehwinkels relativ zu einem Nullpunkt aus der Anzahl der gezählten, durch die Schlitze (4) verursachten Lichtimpulse und zur Ermittlung der Drehrichtung aus der Phasenverschiebung der Signale aufgrund des Winkelversatzes der Schlitzblenden (13a, 13b) nachgeordnet ist, dadurch gekennzeichnet, daß die Schlitzscheibe (3) eine zweite Mehrzahl von eine zweite Spur (8) ausbildenden Schlitzen (7) aufweist, welche radial gegen die erste Spur (6) versetzt sind, wobei die Schlitze (7) der zweiten Spur (8) in Umfangsrichtung jeweils unterschiedliche Schlitzbreiten ($W_i$) aufweisen, und wobei für die zweite Spur (8) ein dritter Licht-Sender (11c) und ein dritter Licht-Empfänger (12c) vorgesehen sind, wobei dem dritten Licht-Empfänger (12c) eine zweite, mit der ersten (14) verbundene elektronische Auswerteanordnung (28) zur Zählung der Lichtimpulse oder Lichtimpulsflanken des ersten oder zweiten Empfängers (12a oder 12b) während der jeweils einer bestimmten Schlitzbreite ($W_i$) entsprechenden Impulsdauer (Fensterbreite) des dritten Empfängers (12c) zur Identifizierung des entsprechenden Schlitzes ($7_i$) der zweiten Spur und damit der Winkelposition der Schlitzscheibe (3) nachgeordnet ist.

2. Positionsgeber nach Anspruch 1, dadurch gekennzeichnet, daß die Schlitze (4 bzw. 7) der ersten bzw. zweiten Spur (6 bzw. 8) so relativ zueinander angeordnet und dimensioniert sind, daß in jedem der durch die Schlitzbreite ($W_i$) der Schlitze ($7_i$) der zweiten Spur (8) definierten Fensterbereiche eine unterschiedliche Anzahl von vollständigen Schlitzen (4) der ersten Spur (6) liegt und die zweite Auswerteanordnung (28) die Anzahl der diesen Schlitzen (4) entsprechenden Impulse erfaßt.

3. Positionsgeber nach Anspruch 1, dadurch gekennzeichnet, daß die Schlitze (4 bzw. 7) der ersten bzw. zweiten Spur (6 bzw. 8) so relativ zueinander angeordnet bzw. dimensioniert sind, daß in jedem der durch die Schlitzbreite ($W_i$) der Schlitze ($7_i$) der zweiten Spur (8) definierten Fensterbereiche eine unterschiedliche Anzahl von ausgewerteten Impulsflanken (16) der ersten Spur (6) liegt und die zweite Auswerteanordnung (28) die Anzahl dieser Impulsflanken (16) erfaßt.

4. Positionsgeber nach Anspruch 3, dadurch gekennzeichnet, daß durch die zweite Auswerteanordnung (28) bei einer Drehbewegung in eine erste Drehrichtung (vorwärts) die positiven, d.h. ansteigenden Impulsflanken (16) und bei einer Drehbewegung in eine zweite Drehrichtung (rückwärts) die negativen, d.h. abfallenden Impulsflanken (16) gezählt werden.

5. Positionsgeber nach Anspruch 3, dadurch gekennzeichnet, daß die Schlitze (4 bzw. 7) der ersten bzw. zweiten Spur (6 bzw. 8) so relativ zueinander angeordnet und dimensioniert sind, daß die Zahl der ausgewerteten, Impulsflanken (16) ausbildenden Schlitzkanten der ersten Spur (6) innerhalb jedes durch die Schlitze ($7_i$) der zweiten Spur (8) definierten Fensterbereiches ($W_i$) größer ist als die Zahl der nichtausgewerteten, Impulsflanken ausbildenden Kanten.

6. Positionsgeber nach Anspruch 1, dadurch gekennzeichnet, daß die zweite Spur (8) und der zugeordnete dritte Sender (11c) und Empfänger (12c) radial innerhalb der ersten Spur (6) angeordnet sind.

7. Positionsgeber nach Anspruch 1, dadurch gekennzeichnet, daß die erste Spur (6) $2^N$ Schlitze, insbesondere 512 Schlitze, und die zweite Spur (8) $2^K$ Schlitze, insbesondere acht Schlitze, umfaßt, wobei K,N ganze Zahlen sind und gilt K<N.

8. Positionsgeber nach Anspruch 7, dadurch gekennzeichnet, daß die einen Schlitzkanten (9) der Schlitze (7) der zweiten Spur (8) jeweils einen Winkelabstand ($\alpha$) von 45° zueinander aufweisen.

9. Positionsgeber nach Anspruch 3, dadurch gekennzeichnet, daß die Schlitze (4 bzw. 7) der ersten bzw. zweiten Spur (6 bzw. 8) und die Schlitze (15) derjenigen Blende (13), deren zugeordneter Empfänger (12a bzw. 12b) zur Zählung der Impulsflanken (16) herangezogen wird, so relativ zueinander angeordnet sind, daß die zu zählenden Impulsflanken (16) etwa in der Mitte des kleinsten Schlitzes ($7_1$) der zweiten Spur (8) bzw. des daraus resultierenden Fensterbereiches ($W_1$) zu liegen kommen.

10. Positionsgeber nach Anspruch 1, dadurch gekennzeichnet, daß als Nullpunkt (O) eine Schlitzkante (9) eines Schlitzes (Schlitz $7_8$) der zweiten Spur herangezogen wird.

**Claims**

1. Position signaling device, especially for industrial sewing machines, having a rotatably mounted slotted wheel (3) which can be coupled with a drive shaft (2) of the machine and which has a plurality of equally wide and equidistantly disposed slots (4) and lands (5) forming a first radial track (6), and fixed slotted masks (13a, 13b) disposed in back of the slotted wheel (3) in the axial direction, offset from one another circumferentially by a defined angle, and disposed concentrically with the sloted wheel (3), comprising slots (15) and lands corresponding to the division of the slotted wheel, and having each a first and a second light emitter (11a, 11b) or light receiver (12a, 12b) disposed behind each slotted mask, and having each a first and a second light receiver (12a, 12b) or light emitter (11a, 11b), respectively, disposed axially parallel on the other side of the slotted wheel, an electronic evaluating system for determining the rotatory speed and the angle of rotation relative to a null point according to the number of counted light pulses caused by the slots (4), and for determining the direction of rotation according to the phase shift of the signals on the basis of the angular offset of the slotted masks (13a, 13b), being arranged downstream of the light receivers (12a, 12b), characterized in that the slotted wheel (3) has a second plurality of slots (7) forming a second track (8), which are offset radially from the first track (6), the slots (7) of the second track (8) having slot widths ($W_1$) differing in the circumferential direction, and a third light emitter (11c) and a third light receiver (12c) being provided for the second track (8), while during the pulse duration (window width) of the third receiver (12c) corresponding to a particular slot width ($W_1$) a second electronic evaluation system (28) connected to the first (14) is connected to the output of the third light receiver (12c) to count the light pulses or light pulse flanks of the first or second receiver (12a or 12b) for the identification of the corresponding slot ($7_1$) of the second track and thus the angular position of the slotted wheel (3).

2. Position signaling device in accordance with claim 1, characterized in that the slots (4 and 7, respectively) of the first and second track (6 and 8, respectively) are disposed and dimensioned relative to one another such that in each of the window areas defined by the slot width ($W_1$) of the slots ($7_1$) of the second track (8) there lies a different number of complete slots (4) of the first track (6) and the second evaluating system (28) detects the number of pulses corresponding to these slots (4).

3. Position signaling device in accordance with claim 1, characterized in that the slots (4 and 7, respectively) of the first and second track (6 and 8, respectively) are disposed and dimensioned relative to one another such that, in each of the window areas defined by the slot width ($W_1$) of the slots ($7_1$) of the second track (8), there lies a different number of evaluated pulse flanks (16) of the first track (6) and the second evaluating system (28) detects the number of these pulse flanks (16).

4. Position signaling device in accordance with claim 3, characterized in that the positive, i.e., ascending pulse flanks (16) are counted by the second evaluating system (28) upon a rotating movement in a first direction (forward), and upon a rotating movement in a second direction (backward) the negative, i.e., descending pulse flanks (16) are counted.

5. Position signaling device in accordance with claim 3, chracterized in that the slots (4 and 7, respectively) of the first and second track (6 and 8, respectively) are disposed and dimensioned relative to one another that the number of the evaluated slot edges of the first track (6) forming pulse flanks (16) within each window area ($W_1$) defined by the slots ($7_1$) of the second track (8) is greater than the number of the edges forming pulse flanks which are not evaluated.

6. Position signaling device in accordance with claim 1, characterized in that the second track (8) and the associated third emitter (11c) and receiver (12c) are disposed radially within the first track (6).

7. Position signaling device in accordance with claim 1, characterized in that the first track (6) includes $2^N$ slots, especially 512 slots, and the second track (8) $2^K$ slots, especially eight slots, K and N being whole numbers and K < N.

8. Position signaling device in accordance with claim 7, characterized in that the one slot edges (9) of the slots (7) of the second track (8) are each at an angular distance apart ($\alpha$) of

45 degrees.

9. Position signaling device in accordance with claim 3, characterized in that the slots (4 and 7) of the first and second tracks (6 and 8, respectively) and the slots (15) of the mask (13) whose associated receivers (12a and 12b, respectively) are used for counting the pulse flanks (16) are disposed relative to one another such that the pulse flanks (16) to be counted are situated approximately in the center of the smallest slot ($7_1$) of the second track (8) or of the window area ($W_1$) resulting therefrom.

10. Position signaling device in accordance with claim 1, characterized in that a slot edge (9) of a slot (slot $7_8$) of the second track is used as null point (0).

**Revendications**

1. Détecteur de position, en particulier pour des machines à coudre industrielles, comprenant un disque à fentes (3) monté rotatif, pouvant être couplé à un arbre de commande (2) de la machine et avec une pluralité de lentes (4) et de barrettes (5) de même largeur, situées équidistantes et constituant une première voie radiale (6), ainsi qu'avec des écrans à lentes (13a, 13b) fixes, situés dans le sens axial derrière le disque à fentes (3) et décalés l'un par rapport à l'autre d'un angle défini dans le sens de la périphérie et situés de manière concentrique au disque à lentes (3) et comprenant des fentes (15) et des barrettes correspondant à la division du disque à lentes, ainsi que chaque fois un premier et un second émetteurs optiques (11a, 11b) ou récepteurs optiques (12a, 12b) situés derrière chaque écran à fentes et chaque fois un premier et un second récepteurs optiques (12a, 12b) ou émetteurs optiques (11a, 11b) parallèles à l'axe par rapport à eux et situés de l'autre côté du disque à lentes, un dispositif électronique d'évaluation étant placé à la suite des récepteurs optiques pour la détermination de la vitesse de rotation et de l'écart angulaire par rapport à un point de référence, à partir du nombre des impulsions de lumière comptées, qui sont provoqués par les lentes (4), et pour la détermination du sens de rotation à partir du déphasage des signaux sur la base du décalage angulaire des écrans à fentes (13a, 13b), caractérisé en ce que le disque à lentes (3) présente une deuxième pluralité de fentes (7) constituant une seconde voie (8), qui sont décalées radialement par rapport à la première voie (6), les lentes (7) de la seconde voie (8) présentant chaque fois des largeurs de fente ($W_1$) différentes dans le sens circonférentiel, et en ce qu'il est prévu pour la seconde voie (8) un troisième émetteur optique (11c) et un troisième récepteur optique (12c), un second dispositif d'évaluation électronique (28), relié au premier (14) étant monté à la suite du troisième récepteur optique (12c) pour le comptage des impulsions de lumière ou des flancs d'impulsions de lumière du premier ou du deuxième récepteur (12a ou 12b) pendant la durée d'impulsion (largeur de fenêtre) du troisième récepteur (12c) correspondant chaque fois à une largeur de fente ($W_1$) déterminée, pour l'identification de la fente correspondante ($7_1$) de la seconde voie et ainsi de la position angulaire du disque à lentes (3).

2. Détecteur de position selon la revendication 1, caractérisé en ce que les lentes (4 ou 7) de la première ou de la seconde voie (6 ou 8) sont disposées et dimensionnées les unes par rapport aux autres de telle manière que dans chacune des zones de fenêtre définies par la largeur de lente ($W_1$) des lentes ($7_1$) de la seconde voie (8), un nombre différent de lentes complètes (4) de la première voie (6) est présent et que le second dispositif d'évaluation (28) détermine le nombre d'impulsions correspondant à ces fentes (4).

3. Détecteur de position selon la revendication 1, caractérisé en ce que les lentes (4 ou 7) de la première ou de la seconde voie (6 ou 8) sont disposées et dimensionnées les unes par rapport aux autres de telle manière que dans chacune des zones de fenêtre définies par la largeur de lente ($W_1$) des fentes ($7_1$) de la seconde voie (8), un nombre différent de flancs d'impulsions (16) évalué de la première voie (6) est présent, et que le second dispositif d'évaluation (28) détermine le nombre de ces flancs d'impulsions (16).

4. Détecteur de position selon la revendication 3, caractérisé en ce que les flancs d'impulsions (16) positifs, c'est-à-dire croissants sont comptés par le second dispositif électronique d'évaluation (28) lors d'un mouvement de rotation dans un premier sens de rotation (en avant), les flancs d'impulsion (16) négatifs, c'est-à-dire décroissants, étant comptés lors d'un mouvement de rotation dans un second sens de rotation (en arrière).

5. Détecteur de position selon la revendication 3, caractérisé en ce que les lentes (4 ou 7) de la première ou de la seconde voie (6 ou 8) sont disposées et dimensionnées les unes par rapport aux autres de telle manière que le nombre des bords des fentes évalués de la première voie (6), formant les flancs d'impulsions (16) à l'intérieur de chaque zone de fenêtre ($W_1$) définie par les lentes ($7_1$) de la seconde voie (8) est supérieur au nombre des bords non évalués, formant les flancs des impulsions.

6. Détecteur de position selon la revendication 1, caractérisé en ce que la seconde voie (8) et le troisième émetteur (11c) et récepteur (12c) qui lui sont adjoints sont disposés radialement à l'intérieur de la première voie (6).

7. Détecteur de position selon la revendication 1, caractérisé en ce que la première voie (6) comprend $2^N$ lentes, en particulier 512 fentes, et que la seconde voie (8) comprend $2^K$ fentes, en particulier huit fentes, K et N étant des nombres entiers avec $K < N$.

8. Détecteur de position selon la revendication 7, caractérisé en ce que les bords de fente (9) des fentes (7) de la seconde voie (8) présentent chaque fois un écart angulaire ($\alpha$) de 45° entre eux.

9. Détecteur de position selon la revendication 3, caractérisé en ce que les lentes (4 ou 7) de la première ou de la seconde voie (6 ou 8) et les fentes (15) de l'écran (13) dont le récepteur associé (12a ou 12b) est utilisé pour le comptage des flancs d'impulsion (16), sont disposées les unes par rapport aux autres de telle manière que les flancs d'impulsion (16) à coupler viennent sensiblement dans le milieu de la lente ($7_1$) la plus petite de la seconde voie (8) ou de la zone de fenêtre ($W_1$) qui en résulte.

10. Détecteur de position selon la revendication 1, caractérisé en ce qu'un bord de lente (9) d'une fente (fente $7_8$) de la seconde voie est utilisé comme point de référence (0).

FIG. 1

FIG. 2

FIG.3

FIG.4

FIG.5

FIG. 6